# EUROPEAN PATENT SPECIFICATION

(11) **EP 4 263 143 B1**
(45) Date of publication and mention of the grant of the patent: **29.04.2026**
(21) Application number: 21904652.1
(22) Date of filing: 15.12.2021
(51) Int. Cl.: B25J 5/02, B25J 9/02, B07B 1/40, B25J 11/00, B25J 19/02, B07B 1/46, B25J 5/04, B25J 9/04

(54) **ROBOTIC PANEL MODULE REMOVAL AND REPLACEMENT IN ORE TREATMENT APPARATUS**
ROBOTERPLATTENMODULENTFERNUNG UND -ERSATZ IN EINER ERZBEHANDLUNGSVORRICHTUNG
RETRAIT ET REMPLACEMENT DE MODULE DE PANNEAU ROBOTIQUE DANS UN APPAREIL DE TRAITEMENT DE MINERAI

(30) Priority: 18.12.2020 AU 2020904723
(43) Date of publication of application: 25.10.2023
(73) Proprietor: Sandvik Rock Processing Australia Pty Limited, North Ryde, NSW 2113 (AU)
(72) Inventor: MAMMADOV, Asad, North Ryde, New South Wales 2113 (AU); VINE, Morgan, North Ryde, New South Wales 2113 (AU); RUSSELL, Steven, North Ryde, New South Wales 2113 (AU); POOLE, Benjamin, North Ryde, New South Wales 2113 (AU)
(74) Representative: Sandvik
(86) International application number: PCT/AU2021/051491
(87) International publication number: WO 2022/126183

(56) References cited:
- WO-A1-2015/172262
- WO-A1-2015/172262
- CA-A1- 3 086 169
- US-B2- 9 254 878

## Description

### Technical Field

The present development relates to the field of removing worn treatment panel modules from an array of such treatment panel modules in a side by side configuration forming a treatment deck of ore or quarry material treatment apparatus, and preferably, replacing such worn treatment panel modules with replacement treatment panel modules.

Throughout this specification including the accompanying patent claims, terms such as "treatment panel module(s)" is intended to include screening panel module(s), dewatering panel module(s) and impact panel module(s), and "treatment deck(s)" is intended to include screening deck(s), dewatering deck(s) and impact deck(s). "Treatment apparatus" is intended to identify apparatus having one or more treatment deck(s) as aforesaid.

### Background Art

Ore treatment apparatus for mined ore or quarry material to break up and/or screen such material, commonly use treatment decks composed in part by panel modules located in a side by side array generally abutting one another and presenting an upwardly facing treatment surface. The ore material may be vibrated on the treatment deck(s) and may be screened through screening apertures of certain sizes and/or shapes, or may be simply passed along the treatment deck to be broken up, at least partially, in the process. The treatment panel modules may typically be secured by various fixing elements along abutting edge regions to underlying support rails normally running in a longitudinal direction of the treatment deck. A commonly utilised fixing system utilises fixing elements in the form of a securing pin fitting into a bore established by profile recessed regions in the abutting edge regions, however, other fixing systems exist, including arrangements where fixing formations integral with the treatment panel module engage directly with the underlying support rails or the like.

When a securing pin is utilised, the pin passes into the bore and through an opening in the underlying supporting rail to fix underneath the rail either directly or indirectly via downwardly projecting parts of the treatment panel modules. Fastening pin types made in two parts comprising a bush and a separate center pin where there is no panel lug that goes through the opening or hole in the underlying support rail, are also known. This is more commonly used in heavier loading applications. Other fixing systems are also used and some other form of securing method is employed including snap in fittings that engage with the underlying support structure or an intermediate member. Clip on type fastening arrangements are utilised in spot locations similar to securing pins via supporting deck rail openings or holes. Clip on type arrangements are also used where a panel module has an entire edge clipped by a fixing element and the fixing element is a long member that is fastened on to deck rail openings, or in some arrangements, directly to underlying cross support beams where there may not be deck supporting rails. Brand names for some of these fastening arrangements include "polysnap", "CP-HDB", "KBX", "H-Pin" and "HDK-Pin".

Screening and other similar ore or quarry material treatment apparatus may also include cover parts adapted to act as a shield between lower surfaces of the treatment panel modules and upper surfaces of a supporting structure for the treatment panel modules. The cover parts may also include sections that comprise or take some part in the fastening of the treatment panel modules to the underlying supporting structure. These cover parts are commonly made of similar materials to those forming outer surface regions of the treatment panel modules and can also be subject to wear and damage during use of ore or quarry material treatment apparatus.

The development of a modular ore treatment deck structure has occurred over a lengthy period of time as ore treatment decks, in use, tend to wear in an uneven manner. Using a modular treatment deck structure allows selected worn individual treatment panel modules to be removed and replaced rather than having to replace the whole treatment deck.

In this type of ore treatment apparatus, it is relatively common for the treatment panel modules to be constructed from moulded hard wearing elastomers and polymer materials including but not limited to, polyurethane, polyamide, ultra high molecular weight polyethylene, and rubber materials. These materials will normally have sufficient elasticity to minimize the likelihood of apertures being blocked, particularly screening apertures in a screen vibration machine. In some instances, multiple such materials may be used. The moulded materials may be moulded over a sub-frame of a suitable metal such as steel or steel alloy. It is also relatively common for these screen panel modules to have a square or rectangular plan configuration with the most typical sizes 1ft x 1ft (0.3m x 0.3m) or 1ft x 2ft (0.3m x 0.6m).

The upwardly facing treatment surface of the treatment decks may be generally flat or may include screening apertures and localised upwardly directed projections such as bars or individual projecting elements of various configurations separated by valleys or gutters.

It is of course the moulded material of these treatment panel modules that primarily wears to varying degrees during operational use. However, some treatment panel modules can have a treatment surface that has exposed "other material" zones, or such "other material" zones become exposed during operational use, and these other material zones also wear to varying degrees during operational use. These other materials may include ceramic or metal inserts, or in fact the metal support frame work supporting the moulded material may become exposed. The wear that does occur, tends to occur to varying degrees across individual panel modules as well as across a treatment deck comprised of an array of such panel modules. At present establishing the degree of wear is achieved by visual observation by work personnel. There have been a number of attempts to assist with wear assessment by visual observation or other means and these include, for example, providing inserted materials such as differing colours in the moulded material at differing depths from the upward facing treatment surface, providing transmittable sensors at various depth levels, and providing apertures or other inclusions that change in shape or size at a design distance from the upper surface indicative of wear reaching a stage where the treatment panel module should be replaced.

One difficulty experienced with treatment apparatus of the above discussed type is that they will often include a stack of treatment decks, that is, one being arranged generally above the other with quite limited physical space between treatment decks. Moreover, often the structure of such treatment apparatus is such that, even with the uppermost deck, there are machine structural parts that limit the space available above the uppermost deck. Often environmental lighting is not good and the closely positioned nature of stacked treatment decks further adversely affects viewability of the screening decks. These factors can result in work personnel having to crawl into confined spaces positioned between treatment decks or onto a limited space zone above an uppermost treatment deck to assess wear occurrence on the treatment panel modules and other issues including other damage around the treatment deck and also potential damage to the treatment deck positioned immediately above. These problems are further exacerbated if the work personnel need to undertake renovation work such as replacing one or more treatment panel modules which, at present, is essentially a manual task with the assistance of manually operated tools. Dangers are also presented to work personnel if they have to enter between decks or get materials or tools between decks or to external work zones. Entering these restricted space regions is both difficult and hazardous. The problems are increased if the treatment panel module must be replaced because, to do so manually, is labour intensive manual work that must be undertaken with manual tools and increases the level of danger and work effort imposed on the worker who must undertake same within such confined areas. CA 3086169 A1 describes screening members and assemblies for vibratory screening machines that incorporate the use of injection molded materials.

As a result, any ability to mechanise some or all of the steps required to renovate a treatment deck, including screen decks, by avoiding the need for work personnel to enter the treatment apparatus for at least some or all of these steps, is a significant step forward.

Accordingly, it is an objective of the present disclosure to provide robotic apparatus that is capable of removing a worn or damaged treatment panel module of a treatment deck in ore treatment apparatus without the need for work personnel to enter spaces within the ore treatment apparatus. A particularly preferred aspect of this disclosure is to provide robotic apparatus that is capable of removing a worn or damaged treatment panel module and replacing same with a replacement treatment panel module without the need for work personnel to enter spaces within the ore treatment apparatus.

A preferred objective may be to integrate such robotic apparatus with scanning means that may provide an automated wear assessment of the treatment deck without the need for work personnel to enter the ore treatment apparatus and particularly not confined spaces of such ore treatment apparatus. While this is of course preferred, utilisation of the robotic apparatus of the present disclosure following manual observation, or observation by any other means, of wear or other damage associated with the treatment deck, still provides significant advantages.

### Summary of the Invention

According to one aspect of this disclosure a robotic apparatus is provided for the renovation of a treatment deck of ore or quarry material treatment apparatus where the treatment deck includes a plurality of said treatment panel modules positioned in a side by side array secured to an underlying deck support structure, said robotic apparatus including: a robotic support structure; transport means for moving said robotic support structure, in use, on or over said treatment panel modules of a said treatment deck; drive means for actuating said transport means; and a treatment panel module handling mechanism including tool mounting means adapted, in use, to mount tool means cooperable with a said treatment panel module intended to be removed from the treatment deck to enable releasing of a said treatment panel module from the underlying deck support structure, said treatment panel module handling mechanism further including lift means operable once a released said treatment panel module has been engaged by said tool means, said lift means is operable to lift the engaged said treatment panel module from said treatment deck. Preferably, the tool means may additionally be cooperable with fixing means holding said treatment panel module intended to be removed to the underlying deck support structure, to release said fixing means from the underlying deck support structure.

Preferably, the transport means is steerable whereby said treatment panel module handling mechanism is positionable relative to said treatment panel module intended to be removed from said treatment deck. Conveniently the transport means is steerable over a predefined course of movement or alternatively is steerable over an operator selected course of movement.

In one preferred embodiment, the robotic apparatus may include a first guide track means and a second guide track means, each being, in use, fixable to said treatment apparatus on opposed sides of a said treatment deck whereby said robotic support structure extends across and above said treatment deck, a respective said transport means being movable along said first and said second guide track means.

In a still further preferred embodiment, the tool mounting means may be connected to said robotic support structure for movement relative to said robotic support structure along at least one path of movement. The at least one path of movement may include two orthogonal movement directions.

In another possible preferred embodiment, the robotic support structure or the tool mounting means may have at least one extraction tool adapted, in use, to release a fixing means retaining a said treatment panel module from the underlying deck support structure of the treatment deck. Preferably, the fixing means includes one or more fixing elements, said extraction tool being capable of removing the or each said fixing element.

In an alternative preferred embodiment, the treatment panel module handling mechanism may include an extending arm structure connected to said robotic support structure at an inboard end and to said tool mounting means at an outboard end of said extending arm structure. Conveniently, the extending arm structure might be extendable or retractable in length. Preferably, a first pivot joint structure connects the inboard end of the extending arm structure to said robotic support structure for selective movement about one or more pivot axes. For example, the first pivot joint structure may enable selective pivoting movement about at least an upright first pivot axis of the extending arm structure relative to said robotic support structure. Still further, the first pivot joint structure may enable selective pivoting movement of the extending arm structure relative to the robotic support structure about at least a second pivot axis transverse to said extending arm structure.

Preferably the first pivot joint structure might be connected to said robotic support structure in a manner enabling said first pivot joint structure to be selectably raised or lowered relative to said support structure.

In another possible configuration, a second pivot joint structure is provided between said tool mounting means and said outboard end of said extending arm structure. The second pivot joint structure may provide selective pivotal movement of said tool mounting means about a third pivot axis extending in a general direction of said extending arm structure. Still further, the second pivot joint structure provides for selective pivotal movement of said tool mounting means about a fourth pivot axis transverse generally to said extending arm structure.

In a still further possible preferred embodiment, the extending arm structure includes at least two articulated arm members connected by a third pivot joint structure enabling relative selective movement of said articulated arm members about a fifth pivot axis disposed generally transverse to said extending arm structure. Conveniently, at least one of the articulated arm members is constructed to be selectably extended or retracted. In a possible alternative arrangement, three said articulated arm members are provided wherein adjacent pairs of said arm members are connected by a said third pivot joint structure. Further, the inboard end of the extending arm structure may be selectably translationally movable along a defined path relative to said robotic support structure while remaining connected thereto.

In a further preferred embodiment, the tool mounting means, or said tool means, is mounted to selectably move in a direction towards said robotic support structure and/or in a direction away from said robotic support structure, said tool means, in one form, being capable of releasing an extracted said treatment panel module held by said tool means into a storage zone in said robotic apparatus. The storage zone may also, in use, be configured to hold replacement said treatment panel modules.

In a still further preferred embodiment when separate fixing elements are utilised to secure the treatment panel modules to the underlying support structure, replacement fixing element supply means is provided carried by said robotic support structure or by said tool mounting means, said replacement fixing element supply means carrying a plurality of replacement said fixing elements. The robotic apparatus may further include at least one installation tool adapted, in use, to install a replacement said fixing element to secure a replacement said treatment panel module to the underlying deck support structure, the or each said installation tool being mounted to or mountable to said tool mounting means. The or each said installation tool may be mountable to said tool mounting means by removing the or each of said extraction tool(s) and mounting a said installation tool in place of a said extraction tool. **In** another possible configuration, a said installation tool and a said extraction tool may be mounted to the tool mounting means in pairs in manner permitting a respect one of each said pair of said installation tool and said extraction tool to be selectively moved to an operative position.

In yet another preferred embodiment, the treatment panel module handling mechanism may also be configured to engage with and hold a replacement said treatment panel module located in a storage zone of said robotic support structure, said replacement said treatment panel module held by the treatment panel module handling mechanism being movable by said robotic apparatus to an installation position in said treatment deck.

Preferably, the robotic apparatus may include first scanning means carried by the robotic apparatus and positioned, in use, to scan a said treatment deck and to create scanned information data being indicative of wear levels on respective said treatment deck and/or fastening means therefore, if provided. The first scanning means may be carried on the treatment panel module handling mechanism or the robotic support structure. The first scanning means may be a said tool means mountable to said tool mounting means. The robotic apparatus, with or without the aforesaid first scanning means, may include a second scanning means positioned, in use, to scan said treatment deck to create further scanned information data, said further scanned information data being indicative of at least one or more of position information data regarding one or more said treatment panel modules, positional information data for installation position(s) for fixing means intended to secure said treatment panel modules to the underlying deck support structure, and positional information data for fixing means, if provided, for securing said treatment panel modules to the underlying deck support structure.

The robotic apparatus may further include first control means positionable , in use, externally of the treatment deck on which the robotic apparatus is intended to operate, said first control means being adapted to receive said scanned information data and to provide control signals to second control means positioned on said robotic apparatus controlling operation of said robotic apparatus on said treatment deck based on said scanned information data. Conveniently communication between said first control means and said robotic apparatus, in use, on said treatment deck occurs wirelessly.

Preferably the robotic apparatus further includes power means, the power means providing power to drive at least the transport means. The power means may be rechargeable battery means carried on the robotic apparatus. As a possible alternative, the power means might include an external power supply connected to the robotic apparatus by an umbilical electrical supply cord. The power means, from whatever source, may provide required power to any operational parts utilised by the robotic apparatus.

It is anticipated that in some preferred arrangements, the robotic apparatus will include cleaning fluid (eg water) spray nozzles directable at the treatment deck, or where possible, underneath regions of the treatment deck, to enable debris or other materials to be removed from treatment deck modules, fastening means or other regions of a treatment deck including the underlying support regions. Cleaning fluid (eg water) could be supplied to such cleaning fluid spray nozzles via an umbilical type hose connection.

The various preferred embodiments outlined in the foregoing paragraphs enable aspects of the tasks required to partially or wholly renovate a treatment (including screening) deck of ore or quarry material treatment apparatus to be undertaken without or minimizing the need for work personnel to enter the internal regions of the treatment apparatus.

### Brief Description of the Drawings

Fig 1 shows perspectively, vibratory treatment apparatus of a typical configuration, including robotic apparatus for removing and replacing treatment panel modules from a treatment deck of the vibratory treatment apparatus;
Fig 2 is a diagrammatic perspective view of the robotic apparatus shown in Fig 1;
Fig 3 is a diagrammatic perspective view of the robotic apparatus of fig 2 where the transport means is supported on opposed guide tracks;
Fig 4 is a diagrammatic perspective view of the robotic apparatus showing same in a parked external position as shown in Fig 1;
Fig 5 perspectively illustrates the robotic apparatus in a position of use on a treatment deck;
Fig 6 is a partial longitudinal sectional view of the ore treatment apparatus of Fig 1 showing the robotic apparatus on the lower treatment deck; and
Fig 7 is a diagrammatic perspective view of a further preferred embodiment of robotic apparatus according to the present disclosure.

### Description of Preferred Embodiments

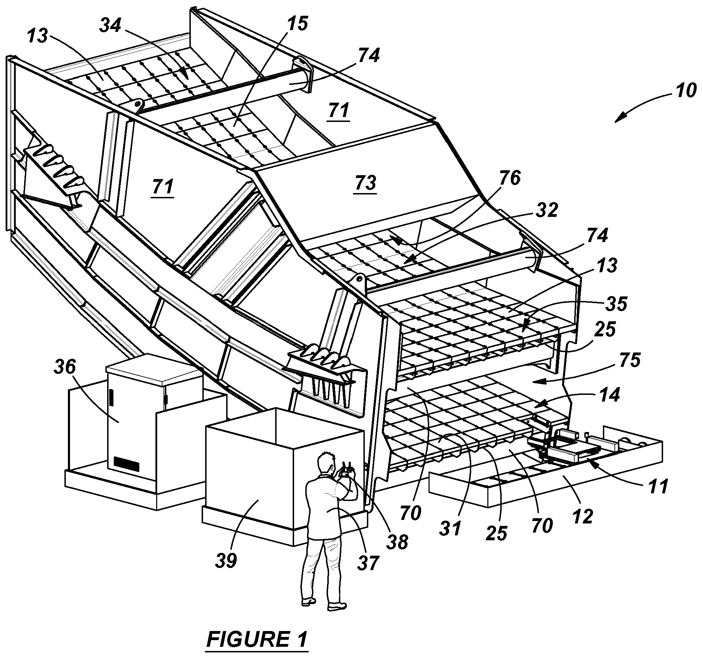

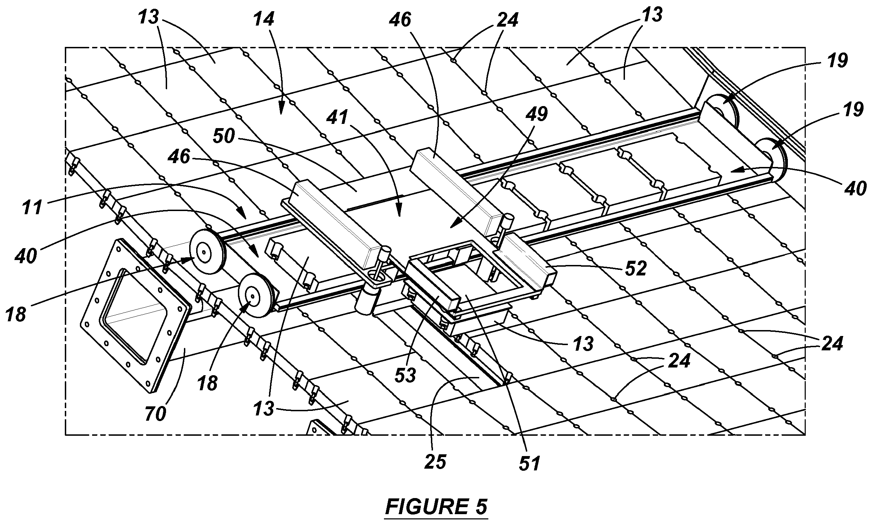

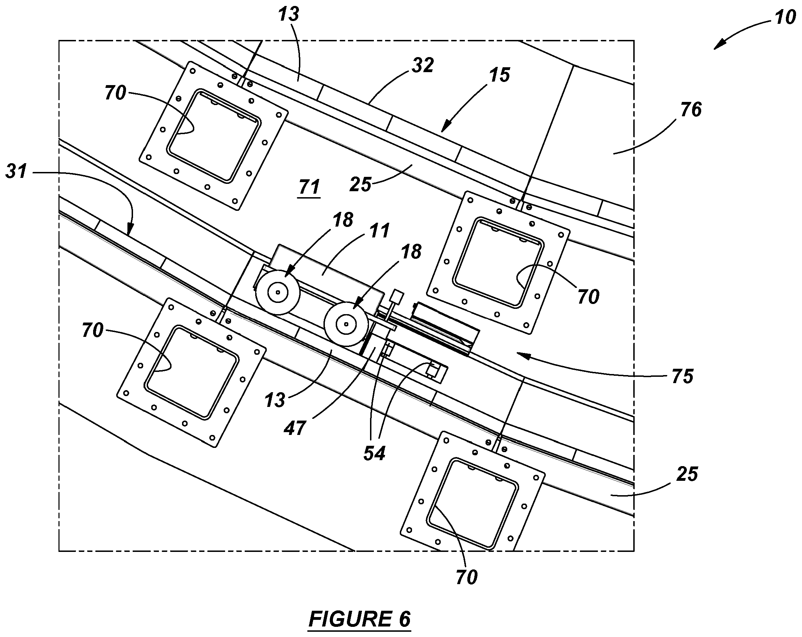

Referring to Fig 1, a typical ore treatment apparatus 10 is illustrated including two stacked treatment decks 14 and 15. The upper treatment deck 15 is positioned immediately above the lower treatment deck 14. Each of the treatment decks 14, 15 are constructed in a similar manner, consisting of a plurality of treatment panel modules 13 positioned in a side by side array and secured to an underlying support structure by securing pins 24. The underlying support structure includes transversely spaced support rails 25 running longitudinally along the treatment decks 14, 15. The support rails 25 are supported on cross support beams 70 (Figs 5, 6) secured to and extending between side walls 71 positioned on either side of the ore treatment apparatus 10. The ore treatment apparatus 10 may typically be of a vibratory type with operative vibrations being created by a vibration creating mechanism 73 to impose a desired vibration regime on the treatment decks 14, 15 in use. Other forms of vibration creating mechanisms might also be employed. The cross support beams 70 are shown with a square tubular profile although other configurations are possible. The cross support beams 70 also provide rigidity and strength to the construction of the ore treatment apparatus 10. Cross bracing beams 74 are also shown connected to and extending between the side walls 71 at a position above the upper treatment deck 15. The treatment panel modules 13 may typically have through flow apertures extending from their upper surfaces which together form an upwardly facing treatment surface 31, 32, to their lower surfaces. These apertures, particularly in differing treatment decks, may have variable sizes and possibly varied shapes to screen particulate ore material of predetermined sizes to a lower region. The lower region may be a lower treatment deck. Some treatment apparatus 10 may have treatment decks where the treatment panel modules 13 are of an impact type and do not include such through extending screening apertures.

As can be seen in Figs 1 and 6, the space 75 between the upwardly facing treatment surface 31 of the lower treatment deck 14 and the lowest extremity of the upper treatment deck 15 is quite limited. The space 76 between the upwardly facing treatment surface 32 of the upper treatment deck 15 and potential obstructions above the deck 15 such as the bracing beams 74 and the vibration creating mechanism 73 is also quite limited. It is within the spaces 75, 76, that robotic apparatus 11, as further described below, must operate.

While Fig 1 shows one example of vibratory ore treatment apparatus 10 in which the robotic apparatus 11, can be used, it will be recognised by those skilled in this art that there are many different forms of such vibratory ore and quarry material treatment apparatus 10, on which the robotic apparatus 11 can be used. Some variations include that the treatment decks 14, 15 might be arranged generally horizontal, or inclined upwardly or downwardly, and further could be varied in number including one, two or three decks, or possibly more. The representation of one form of ore treatment apparatus 10 should therefore be seen as illustrative only and not limiting.

Ore or quarry material to be treated by vibratory ore treatment apparatus 10 would typically be fed to an infeed end 34 of the upper treatment deck 15 and would be moved along the upper treatment deck towards the opposed end 35. In the process of this movement by way of vibrations imposed by vibration creating mechanism 73, ore particles of a certain size would be screened through the upper treatment deck 15 to be deposited on the lower treatment deck 14 where a secondary screening process may be undertaken.

As shown in Fig 1, the robotic apparatus 11 is positioned in a non-use position on a support tray 12 or similar located adjacent the discharge region from the ore treatment apparatus 10 where a chute access port may be located. Conveniently, the robotic apparatus 11 can be introduced onto the upwardly facing surface 32 of the upper treatment deck 15 either by transfer means positioned between the support tray 12 and the respective treatment decks 14, 15, or alternatively providing a drivable transport means to a position where the robotic apparatus 10 can move directly selectively onto the upwardly facing surfaces 31 or 32. Externally located control means 36 maybe located in a stationary position outwardly of the vibratory ore treatment apparatus 10 and be capable of transmitting command instructions to the robotic apparatus 11, either via wireless means or by an umbilical command cord directly connecting with the robotic apparatus 11. The operator 37 may also have a mobile control device 38 that may convey command instructions either directly to the robotic apparatus 11 or via the stationary control means 36. Again transmission connections may be via wireless means or by umbilical cord means. Storage means 39 is provided for new/used treatment panel modules 13. The storage means 39 may further include feed means for feeding and delivering treatment panel modules 13 to the storage area of the support frame 17 of the robotic apparatus 11.

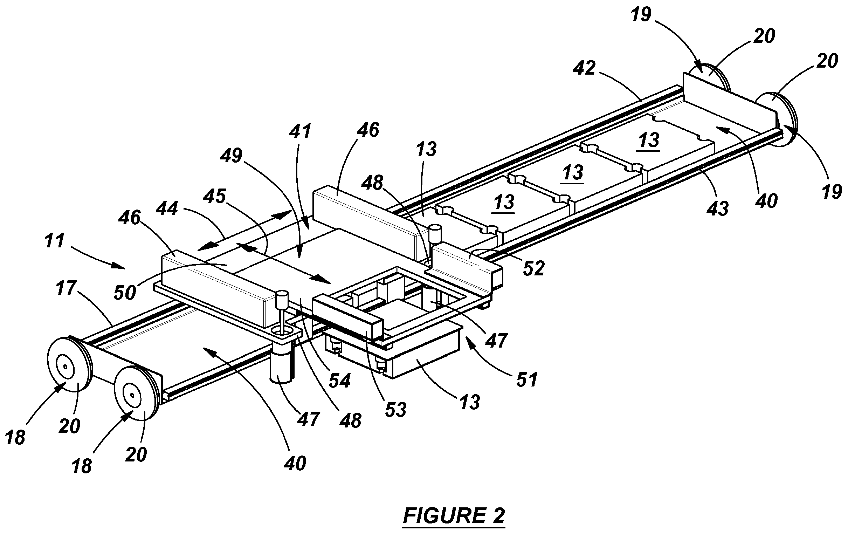

The robotic apparatus 11 may be best seen in Fig 2 and may include a robotic support structure 17 having a support frame carried by drivable transport means 18, 19 located at either end. It is also anticipated that, in some instances transport means might be provided intermediate either end. The transport means 18, 19 is required to carry the support frame 17 for the robotic apparatus 11 across the upwardly facing surfaces 31, 32 of the respective treatment decks 14, 15. It will be recognised that the surfaces 31, 32 of the treatment decks 14, 15 could be quite uneven caused by many factors including screen apertures, when they exist, possible remains of projections on the surfaces, and of course wear conditions after a period of use. The transport means 18, 19 needs therefore to cope with such potential uneven surface conditions, and may be arrangements of any number of wheels 20 including two at either end as illustrated, endless transport tracks, or any other possible transport system for carrying the support frame 17 over the surfaces 31, 32. Suitable drive means (not illustrated) is provided to drive the transport means 18, 19 under command instructions from the operator 37 via the control means 36 and/or the mobile control device 38. It is further desirable that the robotic apparatus 11 be steerable such that it can be directed to follow a desired course on the surfaces 31 or 32 by the operator 37 or follow a predefined course of movement. In this regard, steering means (not illustrated) might be provided operably associated with the transport means 18, 19. Preferably, the transport means 18 or 19 may be drivable independently of one another, either in a forward direction or a rearward direction, or both in a forward or rearward direction.

The support frame 17 includes a storage zone 40 onto which replacement new treatment panel modules 13 are loaded in a predetermined array at the commencement of a work period. Fig 2 illustrates such treatment panel modules 13 positioned in a single layer, however, it is believed possible that the treatment panel modules 13 could be arranged in stacked multiple layers although the overall height of the robotic apparatus 11 including any such carried treatment panel modules 13 needs to be low enough to work within the spaces 75, 76. The overall height of the robotic apparatus 11 should be no greater than 500 mm, preferably less than 300 mm.

The robotic apparatus 11 includes a treatment panel module handling mechanism 41 which is connected to the support frame 17 to move along guide tracks 42, 43 on opposed sides of the storage zone 40. Drive means (not shown) to selectably move the treatment panel module handling mechanism 41 along the guide tracks 42, 43 in the direction (back and forward) indicated by arrow 44 is provided activated by command signals issued by the operator 37 via the control means 36 and/or the mobile control device 38.

The treatment panel module handling mechanism 41 includes storage cartridge means 46 that is arranged to store new and used fixing devices for securing the treatment panel modules 13 to the underlying support frame rails 25. The fixing devices may be securing pins or any other form of fixing element discussed earlier in this specification. The cartridge means 46 may be configured to feed, on receipt of command instructions from the operator 37, a new fixing device to a position of use when a replacement treatment panel module 13 is being installed, and to grip and move a used such fixing device removed from a worn treatment panel module 13 being removed to a storage zone. Separate units of the storage cartridge means 46 might be provided on either side of the treatment panel module handling mechanism 41. Associated with the or each of the storage cartridge means 46 is a fixing device insertion tool or extraction tool 47. The insertion/extraction tool 47 may be mounted to a portion 48 of the treatment panel module handling mechanism 41 that extends beyond the side edge of the support frame 17 to allow the insertions/extraction tool 47 to have access to fixing device insertion position on a treatment deck 14 or 15, or to an installed fixing device on the deck 14 or 15 to allow its selective extraction.

The treatment panel module handling mechanism 41 is mounted for sliding or other translational movement relative to the support frame 17 and further includes a tool mounting means 49 that also extends beyond a side edge of the support frame 17. The tool mounting means may include a body part 50 that is movable along guide tracks 42, 43, or in an alternative, can have a slide plate 54 allowing selective movement in the direction of arrows 45. The tool mounting means 49 may include a variety of tool means including, as illustrated, a gripper support plate 51 or similar structure mounted from the slide plate 54 or body part 50 that includes gripper element means to attach/release a treatment panel module 13 during either an installation or an extraction process. The gripper element means may be suction gripping elements, physical or mechanical gripping and release elements or any other suitable arrangements operated electrically wholly or in part. The gripper support plate 51 is selectably movably mounted by lift means (not shown) relative to the body part 50 or the slide plate 54, to move at least in an up or down direction. The gripper support plate 51 is preferably also mounted to achieve at least limited selective movement side to side, forward and back, rotation, and tilting, relative to the decks 14 or 15. This assists with extraction of, and installation of, treatment panel modules 13 from a treatment deck 14 and 15. Still further it is necessary for treatment panel modules 13 to be bodily moved from or to the storage zone 40 on the support frame 17 during installation or extraction processes on the decks 14 or 15. This means that the gripper support plate 51 needs to be movably mounted to move in the direction of arrow 45 either by the gripper support plate 51 moving relative to the slide plate 54 or by the tool mounting means 49 moving relative to the body part 50.

The tool mounting means 49 may further carry scanning means 52 that may include camera means or any other suitable scanner device(s) that permit observation of treatment panel modules 13 installed on the treatment decks 14 or 15 and any fixing elements for such treatment panel modules 13. Any established images or scanned data material is transmitted, preferably wirelessly, to the control means 36 and/or the mobile control device 38. In a possible alternative, but less preferred embodiment, umbilical cord or cords can be provided to transfer images or scanned material data to the control means 36 and/or the mobile control device 38.

The scanning means 52 also enables observation of installation processes during installation of a replacement treatment panel module 13. In a possible alternative preferred arrangement, the scanning means 52 might also include means for scanning wear levels on the treatment decks 14 or 15. Cleaning fluid delivery means 53 may be provided to spray cleaning fluid such as water on either the treatment decks 14 or 15 to remove as much debris as possible therefrom prior to undertaking extraction or installation processes, or alternatively to clean away remaining debris from the underlying framework including the module supporting rails 25 to assist with installation of a replacement treatment panel module 13. The cleaning fluid delivery means 53 may include one or more controllable spray nozzles (not shown) to direct the cleaning fluid selectably where desired by the operator 37 via the control means 36 and/or the control device 38. Cleaning fluid (such as water) might be supplied by a suitable flexible hose or similar to the delivery means 53.

In one preferred embodiment, the robotic apparatus 11 may have a length as illustrated approximating but just short of the transverse width dimension of each of the treatment decks 14, 15, such that the robotic apparatus 11 can be moved on the transport means 18, 19 up or down the length of the decks 14, 15. In so doing, the treatment panel module handling mechanism 41 can be selectably moved transversely across the treatment decks 14 or 15. This, however, is not essential. The length of the frame structure 17 of the robotic apparatus 11 might be shorter than that illustrated in the annexed drawings. With this preferred embodiment the transport means 18, 19 might be selectably operated to effectively rotate the frame structure 17 on the particular treatment deck 14 or 15 such that the frame structure 17 is disposed extending in a longitudinal direction of the deck 14 or 15, that is, at 90° to the embodiment illustrated in the annexed drawings. In this configuration, the frame structure 17 can be moved transversely across the deck 14 or 15. This provides improved access to the treatment panel modules positioned adjacent the side walls 71 of the ore treatment apparatus 10.

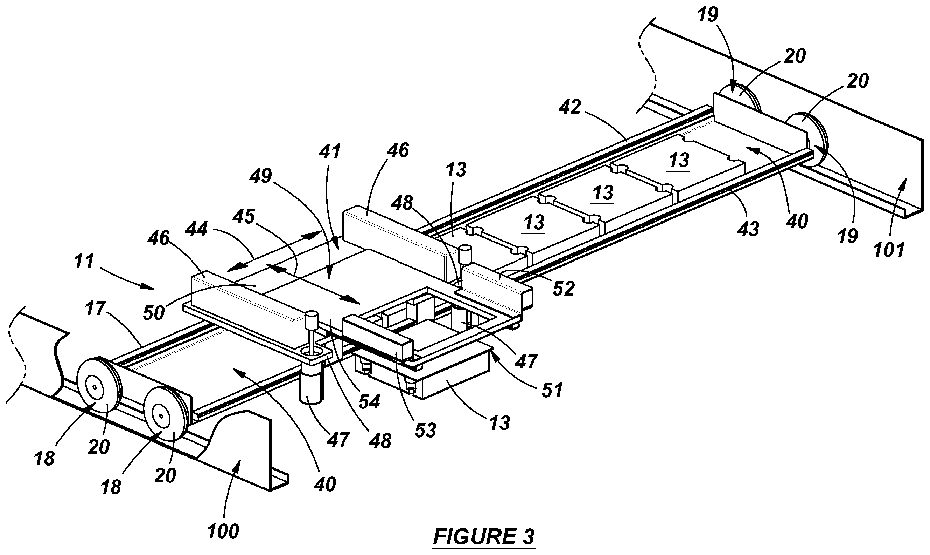

Fig 3 illustrates a further preferred embodiment similar to that shown in Fig 2 where the same reference numerals indicate features similar to those described in the foregoing with reference to Fig 2. The difference with this embodiment is that the transport means 18, 19 are not intended to contact the upwardly facing surfaces 31, 32 of the treatment decks 14, 15. In this embodiment the transport means 18, 19 are positioned for translational movement along guide tracks 100, 101 positioned on either side of the treatment decks 14, 15. The guide tracks 100,101 may be mounted to inwardly facing surfaces or structures of the side walls 71 or to any other structural part of the treatment apparatus 10 whereby the frame structure 17 extends transversely across and above the upwardly facing surfaces 31, 32. The guide tracks 100, 101 may be configured to maintain a constant distance or spacing from the surfaces 31, 32 as the robotic apparatus 11 moves along the guide tracks 100, 101. The guide tracks 100, 101 may be L or C (channel) shaped cross-section or may have other configurations appropriate to the nature of the transport means 18, 19. In a preferred embodiment, the guide tracks 100, 101 and/or the cooperating transport means 18, 19 may be configured to restrain movement of the robotic apparatus 11 vertically, that is in an upwards direction as well as a downwards direction. The transport means 18, 19 may include a wheel or wheels, crawler tracks or gear rack and pinion mechanisms or any combination thereof. An advantage of having the robotic apparatus 11 not directly contact the treatment deck or similar, is that movement on uneven worn surfaces is avoided thereby providing better assessment of wear deterioration of the treatment deck, and more accurate location assessment of parts of the treatment deck including panel modules and fasteners therefore.

With the preferred embodiment shown in Fig 3, like Fig 2, it is possible to selectively locate the treatment panel module handling mechanism sequentially over either selected panel modules 13 or over all panel modules in sequence as may be desired.

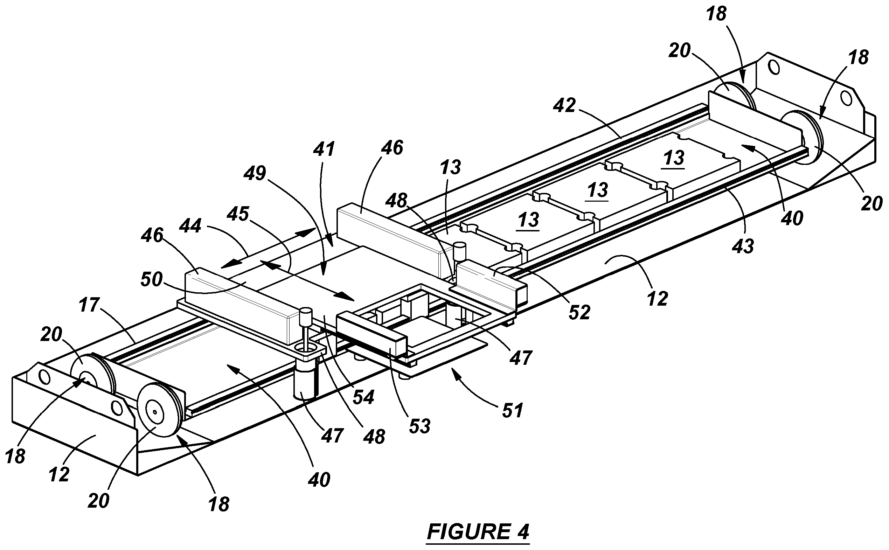

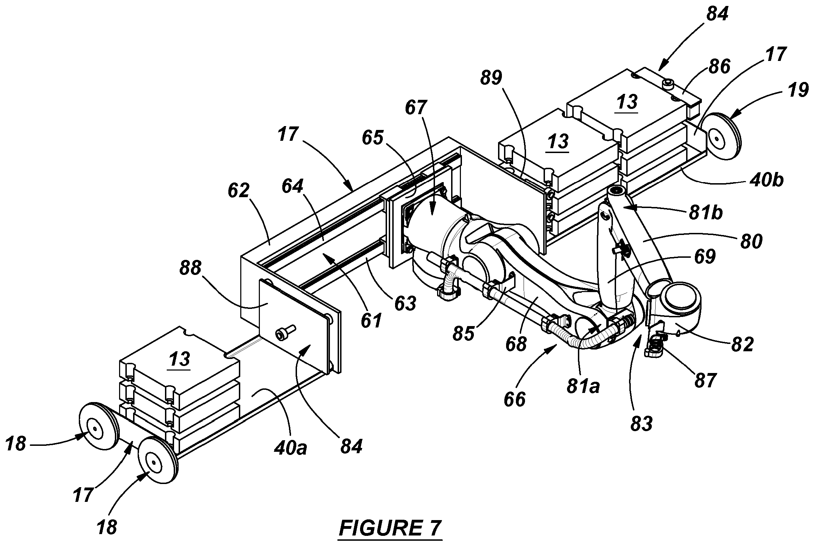

Fig 7 illustrates perspectively in diagrammatic form a second preferred form of robotic apparatus 60 for carrying out tasks similar to the robotic apparatus 11 shown in Figs 1 to 5. This embodiment might operate on a treatment deck 14, 15 or above same as described earlier with reference to Fig 3. In this embodiment, like features have been given the same reference numbers. As with the earlier described embodiment, the robotic apparatus 60 includes a robotic support structure 17 having a support frame carried by drivable transport means 18, 19. Any variations described with reference to the earlier embodiment might, if appropriate, also be used with the embodiment shown in Fig 6. In Fig 6, the robotic support structure 17 includes outer end located storage zones 40a and 40b to hold either replacement treatment panel modules 13 or worn treatment panel modules 13 extracted from the treatment deck. As illustrated, the treatment panel modules 13 can be stacked in storage zones 40a and 40b. The central zone 61 of the robotic support structure 17 is formed in a U-shaped configuration with the bare wall 62 of the U-configuration being disposed in an upright disposition, carrying guide tracks 63, 64. A robotic arm mounting plate 65 is provided mounted to the robotic arm mounting plate 65 via a first pivot joint structure 67 located at an inboard end of the robotic extending arm structure 66.

The robotic extending arm structure 66, in the preferred embodiment illustrated has three arm members 68, 69 and 80, with adjacent pairs joined by respective third pivot joint structures 81a, 81b. At an outboard end of the robotic extending arm structure 66 is a tool mounting means 82 selectably connectable with a variety of tool means 84 carried by the robotic support structure 17 as further described in the following. A second pivot joint structure 83 is provided between the outboard end of the robotic extending arm structure 66 and the tool mounting means 82. The first, second and third pivot joint structures 67, 81a and 81b, may have multiple degrees of selectable pivotal movement under control of a computer based control system guided, at least in part, by scanned data information relating to scanned treatment deck related conditions. The first pivot joint structure 67 might provide for pivotal movement about a first axis perpendicular to the robotic arm mounting plate 65, about a second horizontal axis generally perpendicular to the first axis and about an upright axis perpendicular to the second axis. Similarly, the second pivot joint structure 83 might be constructed to have two or three pivot axis disposed generally perpendicular to one another. The third pivot axes 81a, 81b might have on or multiple pivot axes. Conveniently, any form of mechanism is provided to allow for selective movement of the respective first, second or third pivot joint structures 67, 83, 81a and 81b with control line means 85 enabling control signals and power supply as required to the various tool means 84. Power may be supplied from an external power supply with an umbilical supply line (not shown) with control means also being provided (also not shown) for controlling the robotic arm structure 66.

The tool means 84 include a scanning unit 86 stored on the robotic support structure 17 and when required for use, can be connected to the tool mounting means 82 via a mounting fitting 87. The robotic extending arm structure 66 can then move the scanning unit 86 to a position of use capable of scanning any required aspect of the treatment deck including treatment panel modules 13 and fastening devices therefor. The scanning unit 86 can be moved over the treatment deck by movement of the robotic apparatus 60 on the transport means 18, 19 or by movement of the robotic extending arm structure 66. The tool means 84 might also include a gripper mechanism 88 that includes releasable gripper elements to enable a worn treatment panel module 13 to be held, lifted out of its use position in the treatment deck, and moved to the storage zone 40a/40b. The gripper mechanism 88 can be connected with the mounting fitting 87 by moving the robotic extending arm structure to the storage position for the gripper mechanism 88 on the robotic support structure 17. A replacement treatment panel module 13 can be picked up by the grip mechanism 88 from the storage zones 40a, 40b and position in the treatment deck.

The tool means 84 might also include a variety of other items including fixing element extracting tool means, fixing element installing means, cleaning fluid (water) supply nozzle means and means for supplying cleaning fluid thereto. Storage means 89 for replacement fixing elements and for storing extracted used fixing elements might also be carried on the robotic support structure 17. Any feature or aspect described with reference to the embodiment shown in Figs 1 to 6 might also be employed in the embodiment of Fig 7.

It will be understood that any terms such as "comprises", "comprising", "includes" and/or "including" when used in this specification, specify the presence of stated features, items, steps, operations, elements and/or components, but do not preclude the presence of or addition of one or more other features, items, steps, operations, elements, components and/or groups thereof. Throughout this specification, references is made to treatment deck(s) and parts thereof including treatment panel modules and fasteners therefore releasably securing the panel modules to underlying support structures. Such treatment deck(s) are often found in vibrating screening apparatus for mineral processing and handling in mining and quarrying activities; however, the terms "treatment deck or decks" is intended to also relate to any apparatus or equipment used in comparable use applications.

It will be further appreciated by those skilled in this art, that many variations and modifications to the features, configurations and arrangements of the mobile robotic apparatus 11 or 60 disclosed herein might be made within the scope of the accompanying claims and are considered part of this disclosure.

## Claims

1. Robotic apparatus (11, 60) for renovation of a treatment deck (14, 15) of ore or quarry material treatment apparatus (10) where the treatment deck (14, 15) includes a plurality of treatment panel modules (13) positioned in a side by side array secured to an underlying deck support structure (25, 70), said robotic apparatus (11, 60) including a robotic support structure (17), said robotic apparatus (11, 60) being **characterised by**:
transport means (18, 19) for moving said robotic support structure (17), in use, on or over said treatment panel modules (13) of a said treatment deck (14, 15);
drive means for actuating at least said transport means (18, 19); and
a treatment panel module handling mechanism (41) including tool mounting means (49, 82) adapted, in use to mount tool means (84) cooperable with a said treatment panel module (13) intended to be removed from the treatment deck (14, 15) to enable releasing of a said treatment panel module (13) from the underlying deck support structure (25, 70) of said treatment deck (14, 15), said treatment panel module handling mechanism (41) further including lift means operable once a released said treatment panel module (13) has been engaged by said tool mounting means (49, 82), said lift means being operable to lift the engaged said treatment panel module (13) from the underlying deck support structure (25, 70) of said treatment deck (14, 15).

2. Robotic apparatus (11, 60) according to claim 1, wherein said transport means (18, 19) is steerable whereby said treatment panel module handling mechanism (41) is positionable relative to said treatment panel module (13) to be removed from said treatment deck (14, 15).

3. Robotic apparatus (11, 60) according to claim 1 or claim 2, wherein said tool mounting means (49, 82) is connected to said robotic support structure (17) for movement relative thereto along at least one path of movement, or said at least one path of movement includes two orthogonal movement directions.

4. Robotic apparatus (11, 60) according to claim 1, wherein said robotic apparatus (11, 60) further includes a first guide track means (100) and a second guide track means (101), each being, in use, fixable to said treatment apparatus (10) on opposed sides of a said treatment deck (14, 15) whereby said robotic support structure (17) extends across and above said treatment deck (14, 15), a respective said transport means (18, 19) being movable along said first and said second guide track means (100, 101).

5. Robotic apparatus (11, 60) according to any one of claims 1 to 4, wherein the tool mounting means (29, 82) is additionally cooperable with fixing means holding a said treatment panel module (13) intended to be removed to the underlying deck support structure (25, 70), to release said fixing means from the underlying deck support structure (25, 70), said tool mounting means (40) preferably including at least one extraction tool (47) adapted, in use, to release a said fixing means retaining a said treatment panel module (13) from the underlying deck support structure (25, 70) of the treatment deck (14, 15).

6. Robotic apparatus (11, 60) according to claim 1 or claim 5, wherein said treatment panel module handling mechanism (41) includes an extending arm structure (66) connected to said robotic support structure (17) at an inboard end and to said tool mounting means (82) at an outboard end of said extending arm structure (66).

7. Robotic apparatus (11, 60) according to claim 6, wherein a first pivot joint structure (67) connects said inboard end of said extending arm structure (66) to said robotic support structure (17) for selective movement about one or more pivot axes, preferably said first pivot joint structure (67) being connected to said robotic support structure (17) in a manner enabling said first pivot joint structure (67)to be selectably raised or lowered relative to said robotic support structure (17).

8. Robotic apparatus (11, 60) according to claim 6 or claim 7, wherein a second pivot joint structure (83) being provided between said tool mounting means (82) and said outboard end of said extending arm structure (66), preferably said second pivot joint structure (83) providing selective pivotal movement of said tool mounting means (49) also about a third pivot axis extending in a general direction of said extending arm structure (66), and more preferably said extending arm structure (66) also including at least two articulated arm members (66, 69, 80) connected by a third pivot joint structure (81a, 81b) enabling relative selective movement of said articulated arm members (66, 69, 80) about a fifth pivot axis disposed generally transverse to said extending arm structure (66).

9. Robotic apparatus (11, 60) according to any one of claims 1 to 8, wherein said tool mounting means (49, 82), or said tool means (84), is mounted to selectably move in a direction towards said robotic support structure (17) and/or in a direction away from said robotic support structure (17), said tool means (84) being capable of releasing a removed said treatment panel module (13) held by said tool means (84) into a storage zone (40, 40a, 40b) in said robotic apparatus (11, 60), said storage zone (40, 40a, 40b) preferably also, in use, being configured to hold at least one replacement said treatment panel module (13).

10. Robotic apparatus (11, 60) according to claim 5, wherein replacement fixing element supply means (46) being carried by said robotic support structure (17) or by said tool mounting means (49, 82), said replacement fixing element supply means (46) carrying a plurality of replacement fixing elements forming said fixing means, said robotic apparatus (11, 60) preferably further comprising at least one installation tool (47) adapted, in use, to install a replacement said fixing element to secure a replacement said treatment panel module (13) to the underlying deck support structure (25, 70), the or each said installation tool (47) being mounted to or mountable to said tool mounting means (49, 82).

11. Robotic apparatus (11, 60) according to claim 10, wherein said tool means (84) includes either at least one installation tool (47) adapted, in use, to install a replacement said fixing element to secure a replacement said treatment panel module (13) to the underlying deck support structure (25, 70), the or each said installation tool (47) being mountable to said tool mounting means (49, 82) by removing the or each of said extraction tool(s) (47) and mounting said installation tool (49, 82) in place of a said extraction tool (47), or alternatively, said robotic apparatus (11, 60) includes at least one installation tool (47) adapted, in use, to install a replacement said fixing element to secure a replacement said treatment panel module (13) to the underlying deck support structure (25, 70), wherein a said installation tool (47) and a said extraction tool (47) are mounted to said tool mounting means (49, 82) in pairs in a manner permitting a respective one of each said pair of said installation tool (47) and said extraction tool (47) to be selectively moved to an operative position.

12. Robotic apparatus (11, 60) according to claim 1, wherein the treatment panel module handling mechanism (41) is also configured to grip and hold a replacement said treatment panel module (13) located in a storage zone (40, 40a, 40b) of said robotic support structure (17), said replacement said treatment panel module (13) gripped by a treatment panel module gripping mechanism carried by said treatment panel holding mechanism (41) and is movable by said robotic apparatus (11, 60) to an installation position in said treatment deck (14, 15).

13. Robotic apparatus (11, 60) according to claim 1 or claim 12 further comprising first scanning means (52, 86) carried by said robotic apparatus (11, 60) and positioned, in use, to scan a said treatment deck (14, 15) and to create scanned information data being indicative of wear levels on a respective said treatment panel modules (13) and/or fixing means therefore, if provided, said robotic apparatus (11, 60) preferably further comprising second scanning means (52, 86) carried by said robotic apparatus (11, 60) and positioned, in use, to scan a said treatment deck (14, 15) to create further scanned information data, said further scanned information data being indicative of at least one or more of position information data regarding one or more said treatment panel modules (13), positional information data for installation position(s) for fixing means intended to secure said treatment panel modules (13) to the underlying deck support structure (25, 70), and positional information data for fixing means, if provided, for securing said treatment panel modules (13) to the underlying deck support structure (25, 70).

14. Robotic apparatus (11, 60) according to any one of claims 1 to 12 further comprising scanning means (52, 86) carried by said robotic apparatus (11, 60) and positioned, in use, to scan a said treatment deck (14, 15) and to create scanned information data indicative of at least one or more of positional information data for installation position(s) for fixing means intended to secure said treatment panel modules (13) to the underlying deck support structure (25, 70), and positional information data for fixing means, if provided, for securing said treatment panel modules (13) to the underlying deck support structure (25, 70).

15. Robotic apparatus (11, 60) according to claim 13 or claim 14 further comprising first control means positionable, in use, externally of the treatment deck (14, 15) on which the robotic apparatus (11, 60) is intended to operate, said first control means being adapted to receive said scanned information data and to provide control signals to second control means positioned on said robotic apparatus (11, 60) controlling operation of said robotic apparatus (11, 60) on said treatment deck (14, 15) based on said scanned information data.

## Patentansprüche

1. Robotereinrichtung (11, 60) zur Sanierung einer Behandlungsfläche (14, 15) einer Erz- oder Steinbruchmaterialaufbereitungseinrichtung (10), wobei die Behandlungsfläche (14, 15) eine Vielzahl von Behandlungsplattenmodulen (13) beinhaltet, welche in einer nebeneinanderliegenden Anordnung positioniert sind, welche an einer darunterliegenden Flächenstützstruktur (25, 70) befestigt ist, wobei die Robotereinrichtung (11, 60) eine Roboterstützstruktur (17) beinhaltet, wobei die Robotereinrichtung (11, 60) **gekennzeichnet ist durch**:
Transportmittel (18, 19) zum Bewegen der Roboterstützstruktur (17) im Gebrauch auf oder über die Behandlungsplattenmodule (13) der Behandlungsfläche (14, 15);
Antriebsmittel zum Betätigen zumindest der Transportmittel (18, 19); und
einen Handhabungsmechanismus (41) für Behandlungsplattenmodule, welcher Werkzeugaufnahmemittel (49, 82) beinhaltet, welche im Gebrauch dazu adaptiert sind, Werkzeugmittel (84) aufzunehmen, welche mit einem Behandlungsplattenmodul (13) zusammenwirken können, welches von der Behandlungsfläche (14, 15) entfernt werden soll, um das Behandlungsplattenmodul (13) von der darunterliegenden Flächenstützstruktur (25, 70) der Behandlungsfläche (14, 15) lösen zu können, wobei der Handhabungsmechanismus (41) für Behandlungsplattenmodule weiter Hebemittel beinhaltet, welche bedienbar sind, sobald ein gelöstes Behandlungsplattenmodul (13) von dem Werkzeugaufnahmemittel (49, 82) erfasst wurde, wobei die Hebemittel bedienbar sind, um das erfasste Behandlungsplattenmodul (13) von der darunterliegenden Flächenstützstruktur (25, 70) der Behandlungsfläche (14, 15) zu heben.

2. Robotereinrichtung (11, 60) nach Anspruch 1, wobei die Transportmittel (18, 19) steuerbar sind, wobei der Handhabungsmechanismus (41) für Behandlungsplattenmodule relativ zu dem Behandlungsplattenmodul (13) positionierbar ist, welches von der Behandlungsfläche (14, 15) entfernt werden soll.

3. Robotereinrichtung (11, 60) nach Anspruch 1 oder Anspruch 2, wobei das Werkzeugaufnahmemittel (49, 82) mit der Roboterstützstruktur (17) verbunden ist und sich relativ dazu entlang zumindest eines Bewegungswegs bewegen kann, oder wobei dieser zumindest eine Bewegungsweg zwei orthogonale Bewegungsrichtungen beinhaltet.

4. Robotereinrichtung (11, 60) nach Anspruch 1, wobei die Robotereinrichtung (11, 60) weiter ein erstes Führungsschienenmittel (100) und ein zweites Führungsschienenmittel (101) beinhaltet, welche jeweils im Gebrauch an der Behandlungseinrichtung (10) auf gegenüberliegenden Seiten einer Behandlungsfläche (14, 15) befestigt werden können, wobei sich die Roboterstützstruktur (17) über die und oberhalb der Behandlungsfläche (14, 15) erstreckt, wobei jeweils ein Transportmittel (18, 19) entlang des ersten und zweiten Führungsschienenmittels (100, 101) beweglich ist.

5. Robotereinrichtung (11, 60) nach einem der Ansprüche 1 bis 4, wobei das Werkzeugaufnahmemittel (29, 82) zusätzlich mit einem Befestigungsmittel zusammenwirkt, welches ein Behandlungsplattenmodul (13), welches entfernt werden soll, an der darunterliegenden Flächenstützstruktur (25, 70) hält, um das Befestigungsmittel von der darunterliegenden Flächenstützstruktur (25, 70) zu lösen, wobei das Werkzeugaufnahmemittel (40) bevorzugt zumindest ein Extraktionswerkzeug (47) beinhaltet, welches im Gebrauch dazu adaptiert ist, ein solches Befestigungsmittel, welches ein Behandlungsplattenmodul (13) hält, von der darunterliegenden Flächenstützstruktur (25, 70) der Behandlungsfläche (14, 15) zu lösen.

6. Robotereinrichtung (11, 60) nach Anspruch 1 oder Anspruch 5, wobei der Handhabungsmechanismus (41) für Behandlungsplattenmodule eine ausfahrbare Armstruktur (66) beinhaltet, welche an ihrem inneren Ende mit der Roboterstützstruktur (17) und an ihrem äußeren Ende mit dem Werkzeugaufnahmemittel (82) der ausfahrbaren Armstruktur (66) verbunden ist.

7. Robotereinrichtung (11, 60) nach Anspruch 6, wobei eine erste Schwenkgelenkstruktur (67) das innere Ende der ausfahrbaren Armstruktur (66) mit der Roboterstützstruktur (17) für selektive Bewegung rund um eine oder mehrere Schwenkachsen verbindet, wobei die erste Schwenkgelenkstruktur (67) bevorzugt auf eine Weise mit der Roboterstützstruktur (17) verbunden ist, dass die erste Schwenkgelenkstruktur (67) relativ zu der Roboterstützstruktur (17) selektiv angehoben oder abgesenkt werden kann.

8. Robotereinrichtung (11, 60) nach Anspruch 6 oder Anspruch 7, wobei zwischen dem Werkzeugaufnahmemittel (82) und dem äußeren Ende der ausfahrbaren Armstruktur (66) eine zweite Schwenkgelenkstruktur (83) bereitgestellt ist, wobei bevorzugt die zweite Schwenkgelenkstruktur (83) eine selektive Schwenkbewegung des Werkzeugaufnahmemittels (49) auch rund um eine dritte Schwenkachse bereitstellt, welche sich in einer allgemeinen Richtung der ausfahrbaren Armstruktur (66) erstreckt, und wobei bevorzugter die ausfahrbare Armstruktur (66) auch zumindest zwei gegliederte Armelemente (66, 69, 80) beinhaltet, welche durch eine dritte Schwenkgelenkstruktur (81a, 81b) verbunden sind, welche eine relative selektive Bewegung der gegliederten Armelemente (66, 69, 80) rund um eine fünfte Schwenkachse ermöglicht, welche im Allgemeinen quer zu der ausfahrbaren Armstruktur (66) angeordnet ist.

9. Robotereinrichtung (11, 60) nach einem der Ansprüche 1 bis 8, wobei das Werkzeugaufnahmemittel (49, 82) oder das Werkzeugmittel (84) so montiert ist, dass es sich wahlweise in einer Richtung zu der Roboterstützstruktur (17) und/oder in einer Richtung weg von der Roboterstützstruktur (17) bewegen kann, wobei das Werkzeugmittel (84) in der Lage ist, ein von dem Werkzeugmittel (84) gehaltenes, entferntes Behandlungsplattenmodul (13) in einen Lagerbereich (40, 40a, 40b) in der Robotereinrichtung (11, 60) freizugeben, wobei der Lagerbereich (40, 40a, 40b) bevorzugt auch im Gebrauch dazu konfiguriert ist, zumindest einen Ersatz des Behandlungsplattenmoduls (13) zu halten.

10. Robotereinrichtung (11, 60) nach Anspruch 5, wobei das Versorgungsmittel (46) für das Ersatzbefestigungselement von der Roboterstützstruktur (17) oder von dem Werkzeugaufnahmemittel (49, 82) getragen wird, wobei das Versorgungsmittel (46) für das Ersatzbefestigungselement eine Vielzahl von Ersatzbefestigungselementen trägt, welche das Befestigungsmittel bilden, wobei die Robotereinrichtung (11, 60) bevorzugt weiter zumindest ein Installationswerkzeug (47) umfasst, welches im Gebrauch dazu adaptiert ist, einen Ersatz des Befestigungselements zu installieren, um einen Ersatz des Behandlungsplattenmoduls (13) an der darunterliegenden Flächenstützstruktur (25, 70) zu befestigen, wobei das oder jedes Installationswerkzeug (47) an dem Werkzeugaufnahmemittel (49, 82) befestigt ist oder befestigt werden kann.

11. Robotereinrichtung (11, 60) nach Anspruch 10, wobei das Werkzeugmittel (84) entweder zumindest ein Installationswerkzeug (47) beinhaltet, welches im Gebrauch zum Installieren eines Ersatzes des Befestigungselements adaptiert ist, um einen Ersatz des Behandlungsplattenmoduls (13) an der darunterliegenden Flächenstützstruktur (25, 70) zu befestigen, wobei das oder jedes Installationswerkzeug (47) an dem Werkzeugaufnahmemittel (49, 82) montiert kann, indem das oder jedes der Extraktionswerkzeug(e) (47) entfernt und das Installationswerkzeug (49, 82) anstelle eines Extraktionswerkzeugs (47) montiert wird, oder alternativ, die Robotereinrichtung (11, 60) zumindest ein Installationswerkzeug (47) beinhaltet, welches im Gebrauch dazu adaptiert ist, einen Ersatz des Befestigungselements zu installieren, um einen Ersatz des Behandlungsplattenmoduls (13) an der darunterliegenden Flächenstützstruktur (25, 70) zu befestigen, wobei ein Installationswerkzeug (47) und ein Extraktionswerkzeug (47) paarweise an dem Werkzeugaufnahmemittel (49, 82) montiert sind, sodass jeweils eines von jedem Paar Installationswerkzeuge (47) und Extraktionswerkzeuge (47) selektiv in eine Betriebsposition bewegt wird.

12. Robotereinrichtung (11, 60) nach Anspruch 1, wobei der Handhabungsmechanismus (41) für Behandlungsplattenmodule auch dazu konfiguriert ist, einen Ersatz des Behandlungsplattenmoduls (13) zu greifen und zu halten, welches sich in einem Lagerbereich (40, 40a, 40b) der Roboterstützstruktur (17) befindet, wobei der Ersatz des Behandlungsplattenmoduls (13) von einem Behandlungsplattenmodul-Greifmechanismus ergriffen wird, welcher von dem Haltemechanismus (41) für Behandlungsplatten getragen wird, und von der Robotereinrichtung (11, 60) zu einer Installationsposition in der Behandlungsfläche (14, 15) beweglich ist.

13. Robotereinrichtung (11, 60) nach Anspruch 1 oder Anspruch 12, weiter ein erstes Abtastmittel (52, 86) umfassend, welches von der Robotereinrichtung (11, 60) getragen wird und im Gebrauch so positioniert ist, dass es eine Behandlungsfläche (14, 15) abtastet und abgetastete Informationsdaten erzeugt, welche Abnutzungsniveaus auf einem jeweiligen Behandlungsplattenmodul (13) und/oder Befestigungsmitteln dafür anzeigen, wobei, falls bereitgestellt, die Robotereinrichtung (11, 60) bevorzugt weiter ein zweites Abtastmittel (52, 86), welches von der Robotereinrichtung (11, 60) getragen wird und im Gebrauch so positioniert ist, dass es die Behandlungsfläche (14, 15) abtastet, um weitere abgetastete Informationsdaten zu erzeugen, wobei die weiteren abgetasteten Informationsdaten zumindest eines oder mehrere von Positionsinformationsdaten in Bezug auf eines oder mehrere der Behandlungsplattenmodule (13), Positionsinformationsdaten für die Installationsposition(en) für Befestigungsmittel, welche zur Befestigung der Behandlungsplattenmodule (13) an der darunterliegenden Flächenstützstruktur (25, 70) vorgesehen sind, und Positionsinformationsdaten für Befestigungsmittel, falls bereitgestellt, zur Befestigung der Behandlungsplattenmodule (13) an der darunterliegenden Flächenstützstruktur (25, 70) anzeigen.

14. Robotereinrichtung (11, 60) nach einem der Ansprüche 1 bis 12, weiter ein Abtastmittel (52, 86) umfassend, welches von der Robotereinrichtung (11, 60) getragen wird und im Gebrauch so positioniert ist, dass es eine Behandlungsfläche (14, 15) abtastet, und abgetastete Informationsdaten erzeugt, welche zumindest eine oder mehrere von Positionsinformationsdaten für die Installationsposition(en) für Befestigungsmittel, welche zur Befestigung der Behandlungsplattenmodule (13) an der darunterliegenden Flächenstützstruktur (25, 70) vorgesehen sind, und Positionsinformationsdaten für Befestigungsmittel, falls bereitgestellt, zur Befestigung der Behandlungsplattenmodule (13) an der darunterliegenden Flächenstützstruktur (25, 70) anzeigen.

15. Robotereinrichtung (11, 60) nach Anspruch 13 oder Anspruch 14, weiter ein erstes Steuermittel umfassend, welches im Gebrauch außerhalb der Behandlungsfläche (14, 15) positioniert werden kann, auf welcher die Robotereinrichtung (11, 60) betrieben werden soll, wobei das erste Steuermittel dazu adaptiert ist, die abgetasteten Informationsdaten zu empfangen und Steuersignale an eine zweite Steuereinrichtung bereitzustellen, welche auf der Robotereinrichtung (11, 60) positioniert ist und den Betrieb der Robotereinrichtung (11, 60) auf der Behandlungsfläche (14, 15) basierend auf den abgetasteten Informationsdaten steuert.

## Revendications

1. Appareil robotisé (11, 60) pour la rénovation d'une plateforme de traitement (14, 15) d'un appareil de traitement de minerai ou de matériaux de carrière (10), la plateforme de traitement (14, 15) incluant une pluralité de modules de panneau de traitement (13) positionnés côte à côte et fixés à une structure de support de plateforme sous-jacente (25, 70), ledit appareil robotisé (11, 60) incluant une structure de support robotisée (17), ledit appareil robotisé (11, 60) étant **caractérisé par** :
des moyens de transport (18, 19) pour déplacer ladite structure de support robotisée (17), en utilisation, sur ou au-dessus desdits modules de panneau de traitement (13) d'une dite plateforme de traitement (14, 15) ;
des moyens d'entraînement pour actionner au moins lesdits moyens de transport (18, 19) ; et
un mécanisme de manutention de module de panneau de traitement (41) incluant des moyens de montage d'outils (49, 82) adaptés, en utilisation, pour monter des moyens d'outils (84) pouvant coopérer avec ledit module de panneau de traitement (13) destiné à être retiré de la plate-forme de traitement (14, 15) pour permettre la libération d'un dit module de panneau de traitement (13) de la structure de support de plate-forme sous-jacente (25, 70) de ladite plate-forme de traitement (14, 15), ledit mécanisme de manutention de module de panneau de traitement (41) incluant en outre des moyens de levage actionnables une fois qu'un module de panneau de traitement (13) libéré a été mis en prise par lesdits moyens de montage d'outils (49, 82), lesdits moyens de levage étant actionnables pour soulever ledit module de panneau de traitement (13) mis en prise de la structure de support de plate-forme sous-jacente (25, 70) de ladite plate-forme de traitement (14, 15).

2. Appareil robotisé (11, 60) selon la revendication 1, dans lequel lesdits moyens de transport (18, 19) sont orientables de sorte que ledit mécanisme de manutention de module de panneau de traitement (41) puisse être positionné par rapport audit module de panneau de traitement (13) pour être retiré de ladite plate-forme de traitement (14, 15).

3. Appareil robotisé (11, 60) selon la revendication 1 ou la revendication 2, dans lequel lesdits moyens de montage d'outils (49, 82) sont reliés à ladite structure de support robotisée (17) pour se déplacer par rapport à celle-ci le long d'au moins un trajet de déplacement, ou ledit au moins un trajet de déplacement inclut deux directions de déplacement orthogonales.

4. Appareil robotisé (11, 60) selon la revendication 1, dans lequel ledit appareil robotisé (11, 60) inclut en outre un premier moyen de rail de guidage (100) et un second moyen de rail de guidage (101), chacun pouvant, en utilisation, être fixé audit appareil de traitement (10) sur des côtés opposés d'une dite plate-forme de traitement (14, 15), de sorte que ladite structure de support robotisée (17) s'étende au-dessus et à travers ladite plate-forme de traitement (14, 15), un moyen de transport (18, 19) respectif pouvant se déplacer le long desdits premier et second moyens de rail de guidage (100, 101).

5. Appareil robotisé (11, 60) selon l'une quelconque des revendications 1 à 4, dans lequel les moyens de montage d'outils (29, 82) peuvent en outre coopérer avec des moyens de fixation retenant un dit module de panneau de traitement (13) destiné à être retiré sur la structure de support de plate-forme sous-jacente (25, 70) pour libérer lesdits moyens de fixation de la structure de support de plate-forme sous-jacente (25, 70), lesdits moyens de montage d'outils (40) incluant de préférence au moins un outil d'extraction (47) adapté, en utilisation, pour libérer un dit moyen de fixation retenant ledit module de panneau de traitement (13) de la structure de support de plate-forme sous-jacente (25, 70) de la plate-forme de traitement (14, 15).

6. Appareil robotisé (11, 60) selon la revendication 1 ou la revendication 5, dans lequel ledit mécanisme de manutention de module de panneau de traitement (41) inclut une structure de bras extensible (66) reliée à ladite structure de support robotisée (17) à une extrémité intérieure et auxdits moyens de montage d'outils (82) à une extrémité extérieure de ladite structure de bras extensible (66).

7. Appareil robotisé (11, 60) selon la revendication 6, dans lequel une première structure d'articulation pivotante (67) relie ladite extrémité intérieure de ladite structure de bras extensible (66) à ladite structure de support robotisée (17) pour un déplacement sélectif autour d'un ou de plusieurs axes de pivot, de préférence ladite première structure d'articulation pivotante (67) étant reliée à ladite structure de support robotisée (17) de manière à permettre à ladite première structure d'articulation pivotante (67) d'être sélectivement levée ou abaissée par rapport à ladite structure de support robotisée (17).

8. Appareil robotisé (11, 60) selon la revendication 6 ou 7, dans lequel une seconde structure d'articulation pivotante (83) est prévue entre lesdits moyens de montage d'outils (82) et ladite extrémité extérieure de ladite structure de bras extensible (66), de préférence ladite seconde structure d'articulation pivotante (83) assurant un déplacement de pivotement sélectif desdits moyens de montage d'outils (49) également autour d'un troisième axe de pivotement s'étendant dans une direction générale de ladite structure de bras extensible (66), et plus préférentiellement ladite structure de bras extensible (66) incluant également au moins deux organes de bras articulés (66, 69, 80) reliés par une troisième structure d'articulation pivotante (81a, 81b) permettant un déplacement sélectif relatif desdits organes de bras articulés (66, 69, 80) autour d'un cinquième axe de pivotement disposé généralement transversalement à ladite structure de bras extensible (66).

9. Appareil robotisé (11, 60) selon l'une quelconque des revendications 1 à 8, dans lequel lesdits moyens de montage d'outils (49, 82), ou lesdits moyens d'outils (84), sont montés de manière à se déplacer de façon sélective dans une direction vers ladite structure de support robotisée (17) et/ou dans une direction s'éloignant de ladite structure de support robotisée (17), lesdits moyens d'outils (84) étant capables de libérer un dit module de panneau de traitement retiré (13) tenu par lesdits moyens d'outils (84) dans une zone de stockage (40, 40a, 40b) dans ledit appareil robotisé (11, 60), ladite zone de stockage (40, 40a, 40b) étant de préférence également, en utilisation, configurée pour contenir au moins un module de panneau de traitement de remplacement (13).

10. Appareil robotisé (11, 60) selon la revendication 5, dans lequel des moyens de fourniture d'éléments de fixation de remplacement (46) sont portés par ladite structure de support robotisée (17) ou par lesdits moyens de montage d'outils (49, 82), lesdits moyens de fourniture d'éléments de fixation de remplacement (46) portant une pluralité d'éléments de fixation de remplacement formant lesdits moyens de fixation, ledit appareil robotisé (11, 60) comprenant de préférence en outre au moins un outil d'installation (47) adapté, en utilisation, pour installer un dit élément de fixation de remplacement afin de fixer un dit module de panneau de traitement de remplacement (13) à la structure de support de plate-forme sous-jacente (25, 70), le ou chaque outil d'installation (47) étant monté ou pouvant être monté sur lesdits moyens de montage d'outils (49, 82).

11. Appareil robotisé (11, 60) selon la revendication 10, dans lequel lesdits moyens d'outils (84) incluent soit au moins un outil d'installation (47) adapté, en utilisation, pour installer un dit élément de fixation de remplacement afin de fixer un dit module de panneau de traitement de remplacement (13) à la structure de support de plate-forme sous-jacente (25, 70), soit le ou chaque outil d'installation (47) pouvant être monté sur lesdits moyens de montage d'outils (49, 82) en retirant le ou chaque outil d'extraction (47) et en montant ledit outil d'installation (49, 82) à la place d'un dit outil d'extraction (47), soit, en variante, ledit appareil robotisé (11, 60) inclut au moins un outil d'installation (47) adapté, en utilisation, pour installer un dit élément de fixation de remplacement afin de fixer un dit module de panneau de traitement de remplacement (13) à la structure de support de plate-forme sous-jacente (25, 70), dans lequel un dit outil d'installation (47) et un dit outil d'extraction (47) sont montés sur lesdits moyens de montage d'outils (49, 82) par paires de manière à permettre un respectif de chaque paire dudit outil d'installation (47) et dudit outil d'extraction (47) d'être déplacé sélectivement vers une position opérationnelle.

12. Appareil robotisé (11, 60) selon la revendication 1, dans lequel le mécanisme de manutention de module de panneau de traitement (41) est également configuré pour saisir et maintenir un module de panneau de traitement de remplacement (13) situé dans une zone de stockage (40, 40a, 40b) de ladite structure de support robotisée (17), ledit module de panneau de traitement de remplacement (13) étant saisi par un mécanisme de préhension de module de panneau de traitement porté par ledit mécanisme de maintien de panneau de traitement (41) et pouvant être déplacé par ledit appareil robotisé (11, 60) vers une position d'installation dans ladite plate-forme de traitement (14, 15).

13. Appareil robotisé (11, 60) selon la revendication 1 ou la revendication 12, comprenant en outre des premiers moyens de balayage (52, 86) portés par ledit appareil robotisé (11, 60) et positionnés, en utilisation, pour balayer une dite plate-forme de traitement (14, 15) et créer des données d'informations balayées indiquant des niveaux d'usure sur un dit module de panneau de traitement (13) respectif et/ou ses moyens de fixation, s'ils sont prévus, ledit appareil robotisé (11, 60) comprenant de préférence en outre des seconds moyens de balayage (52, 86) portés par ledit appareil robotisé (11, 60) et positionnés, en utilisation, pour balayer une dite plate-forme de traitement (14, 15) afin de créer des données d'informations balayées supplémentaires, lesdites données d'informations balayées supplémentaires indiquant au moins une ou plusieurs de données d'informations de position concernant un ou plusieurs dits modules de panneau de traitement (13), de données d'informations de position pour une ou plusieurs positions d'installation de moyens de fixation destinés à fixer lesdits modules de panneau de traitement (13) à la structure de support de plate-forme sous-jacente (25, 70), et de données d'informations de position pour des moyens de fixation, s'ils sont prévus, pour fixer lesdits modules de panneau de traitement (13) à la structure de support de plate-forme sous-jacente (25, 70).

14. Appareil robotisé (11, 60) selon l'une quelconque des revendications 1 à 12, comprenant en outre des moyens de balayage (52, 86) portés par ledit appareil robotisé (11, 60) et positionnés, en utilisation, pour balayer une dite plate-forme de traitement (14, 15) et pour créer des données d'informations balayées indiquant au moins une ou plusieurs de données d'informations de position pour une ou plusieurs positions d'installation pour des moyens de fixation destinés à fixer lesdits modules de panneau de traitement (13) à la structure de support de plate-forme sous-jacente (25, 70), et de données d'informations de position pour des moyens de fixation, s'ils sont prévus, pour fixer lesdits modules de panneau de traitement (13) à la structure de support de plate-forme sous-jacente (25, 70).

15. Appareil robotisé (11, 60) selon la revendication 13 ou la revendication 14, comprenant en outre des premiers moyens de commande pouvant être positionnés, en utilisation, à l'extérieur de la plateforme de traitement (14, 15) sur laquelle l'appareil robotisé (11, 60) est destiné à fonctionner, lesdits premiers moyens de commande étant adaptés pour recevoir lesdites données d'informations balayées et pour fournir des signaux de commande à des seconds moyens de commande positionnés sur ledit appareil robotisé (11, 60) commandant le fonctionnement dudit appareil robotisé (11, 60) sur ladite plateforme de traitement (14, 15) sur la base desdites données d'informations balayées.
